(19) Europäisches Patentamt
European Patent Office
Office européen des brevets

(11) EP 1 923 444 B1

(12) EUROPEAN PATENT SPECIFICATION

(45) Date of publication and mention of the grant of the patent:
**01.02.2012 Bulletin 2012/05**

(21) Application number: **06797381.8**

(22) Date of filing: **04.09.2006**

(51) Int Cl.:
***C09J 133/00*** *(2006.01)* ***C09J 7/02*** *(2006.01)*
***C08K 3/00*** *(2006.01)*

(86) International application number:
**PCT/JP2006/317458**

(87) International publication number:
**WO 2007/029644 (15.03.2007 Gazette 2007/11)**

# (54) ADHESIVE COMPOSITION, ADHESIVE SHEET, AND SURFACE-PROTECTIVE FILM

KLEBSTOFF, KLEBEVLIES UND OBERFLÄCHENSCHUTZFILM

COMPOSITION ADHESIVE, FEUILLE ADHESIVE, ET FILM PROTECTEUR DE SURFACE

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.09.2005 JP 2005256291**

(43) Date of publication of application:
**21.05.2008 Bulletin 2008/21**

(73) Proprietor: **NITTO DENKO CORPORATION**
**Ibaraki-shi, Osaka 567-8680 (JP)**

(72) Inventors:
- **UKEI, Natsuki**
**Shimohozumi, Ibaraki-shi, Osaka 5678680 (JP)**
- **AMANO, Tatsumi**
**Shimohozumi, Ibaraki-shi, Osaka 5678680 (JP)**
- **ANDO, Masahiko**
**Shimohozumi, Ibaraki-shi, Osaka 5678680 (JP)**

(74) Representative: **TBK**
**Bavariaring 4-6**
**80336 München (DE)**

(56) References cited:
**EP-A1- 1 602 698**
**JP-A- 05 009 449**
**JP-A- 09 059 581**
**JP-A- 2000 129 235**
**JP-A- 2001 146 581**
**JP-A- 2001 512 508**
**JP-A- 2005 200 607**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 923 444 B1

Printed by Jouve, 75001 PARIS (FR)

## Description

TECHNICAL FIELD

The present invention relates to acrylic pressure sensitive adhesive compositions. More specifically, the present invention relates to an antistatic pressure sensitive adhesive composition, a pressure sensitive adhesive sheet therewith and a surface-protecting film.

Pressure sensitive adhesive sheets using the antistatic pressure sensitive adhesive composition of the present invention are particularly useful for plastic products potentially susceptible to static electricity. In particular, the pressure sensitive adhesive sheets are useful for antistatic releasable pressure sensitive adhesive sheets or tapes for applications in which static electricity is unwanted, such as electronic devices.

Examples of releasable pressure sensitive adhesive sheets and releasable pressure sensitive adhesive tapes include masking tapes such as masking tapes for building curing, masking tapes for automobile painting, masking tapes for electronic components (such as lead frames and printed boards), and masking tapes for sandblasting; surface-protecting films such as surface-protecting films for aluminum sashes, surface-protecting films for optical plastics, surface-protecting films for optical glass products, surface-protecting films for automobile protection, and surface-protecting films for metal plates; pressure sensitive adhesive tapes for use in semiconductor and electronic component processes, such as back grinding tapes, pellicle fixing tapes, dicing tapes, lead frame fixing tapes, cleaning tapes, dust removing tapes, carrier tapes, and cover tapes; tapes for packing electronic devices or electronic components; tapes for temporary bonding during transportation; binding tapes; and labels.

BACKGROUND ART

In recent years, for transportation of optical or electronic components or mounting of optical or electronic components on printed boards, each component is often packed with a given sheet, or a pressure sensitive adhesive tape is often attached to each component, before transfer. In particular, surface-protecting films are widely used in the field of optical or electronic components.

In general, such surface-protecting films are attached to materials to be protected through a pressure sensitive adhesive layer provided on the protecting film side and used to prevent scratching or staining during the processing or transportation of the materials. For example, in the process of forming a liquid crystal display panel by bonding optical components such as polarizing plates and wave plates to a liquid crystal cell through pressure sensitive adhesive layers, surface-protecting films are attached through pressure sensitive adhesive layers to the optical components to be bonded to the liquid crystal cell.

Then, the surface-protecting film is removed by peeling off at the stage when the protecting film becomes unnecessary, for example, this optical member is stuck to the liquid crystal cell. Generally, the surface-protecting film and the optical member are composed of plastic materials, so that electrical insulating property is high and static electricity is caused during friction and peeling off. Therefore, even when the protecting films are peeled from the optical components such as polarizing plates, static electricity is generated. If the generated static electricity remains when a voltage is applied to the liquid crystal, the liquid crystal molecule can be out of alignment, or the panel can be damaged. Thus, in order to prevent such defects, various antistatic treatments are applied to the surface-protecting film.

An attempt has been carried out to suppress the static electricity described above. For example, there is disclosed a method including adding one or more surfactants to a pressure sensitive adhesive and transferring the surfactant from the pressure sensitive adhesive to the adherend to prevent static electricity (see, for example, Patent Literature 1 listed below). In this technique, however, the surfactant is allowed to bleed from the pressure sensitive adhesive to its surface and transferred to the adherend. If this technique is applied to a surface-protecting film, the material to be protected can be stained with the surfactant that is added for sufficient antistatic properties. When a pressure sensitive adhesive containing a low-molecular weight surfactant is used for optical component- protecting films, sufficient antistatic properties are difficult to provide without degradation of the optical properties of the optical component.

Also, a method of adding an antistatic agent comprising polyether polyol compounds and an alkali metal salt to acrylic pressure sensitive adhesive to restrain the antistatic agent from bleeding on the surface of the pressure sensitive adhesive is disclosed (for example, refer to Patent Literature 2). However, bleeding of the antistatic agent can not be avoided also in this method; consequently, in the case of actually applying to the surface-protecting film, it has proved that treatment with time and under high temperature causes staining on the adherend due to the bleeding phenomenon.

As described above, there has been yet no technique available for solving the above problems in a well-balanced manner, and it has been difficult to meet the requirements for a further improvement of antistatic surface-protecting films in the electronic device-related field where electrification or staining can cause a particularly serious problem.

Patent Publication 1: JP-A No. 9-165460
Patent Publication 2: JP-A No. 6-128539

Disclosure of the Invention

Problems to be solved by the invention

In light of the circumstances described above, therefore, the present invention provides a pressure sensitive adhesive composition which is excellent in antistatic property of a non-electrification-prevented adherend upon peeling, and has reduced staining of an adherend and is excellent in adhesion reliance, also provides an antistatic pressure sensitive adhesive sheet or surface-protecting film prepared using the composition.

Summary of the invention

In order to solve the aforementioned problems, the present inventors intensively studied and, as a result, found out that the aforementioned object can be attained by a pressure sensitive adhesive composition shown below, which resulted in completion of the present invention.

Specifically, the pressure sensitive adhesive composition of the present invention includes: a (meth)acrylic polymer containing, as a monomer component, 0.1 to 4.9% by weight of a reactive monomer having an alkylene oxide group, wherein the reactive monomer has an average number of moles of an oxyalkylene unit added to the reactive monomer falls within the range from 3 to 40, and an alkali metal.

A (meth)acryl-based polymer in the present invention refers to an acryl-based polymer and/or a methacryl-based polymer. An alkyl (meth)acrylate refers to an alkyl acrylate and/or an alkyl methacrylate, and a (meth)acrylate refers to an acrylate and/or a methacrylate.

According to the present invention, the pressure sensitive adhesive composition includes, as a base polymer, a (meth)acrylic polymer containing, as a monomer component, 0.1 to 4.9% by weight of an alkylene oxide group-containing reactive monomer having an average number of moles of an oxyalkylene unit added to the reactive monomer of 3 to 40 and also includes an alkali metal salt. When this pressure sensitive adhesive composition is used, the resulting crosslinked pressure sensitive adhesive layer can prevent electrification of non-antistatically finished subjects to be protected (adherends) upon peeling, and staining on an adherend is reduced. Although the reason why the crosslinked product of the pressure sensitive adhesive composition described above can produce such characteristics is not clear in detail, it can be considered that the alkali metal salt can coordinate with the ether group of the alkylene oxide group-containing reactive monomer unit so that the alkali metal salt can be prevented from bleeding, and as a result, good antistatic properties and low staining can be achieved at the same time.

The pressure sensitive adhesive composition of the present invention includes an alkali metal salt. Compatibility and well-balanced interaction with the (meth)acrylic polymer and so on can be obtained using the alkali metal salt, and the resulting pressure sensitive adhesive composition can prevent electrification upon peeling and reduce staining on an aherend.

Examples of the alkali metal salt to be used include lithium salts, sodium salts and potassium salts. Highly dissociable lithium salts are particularly preferred.

In the pressure sensitive adhesive composition of the present invention, the (meth)acrylic polymer containing, as a monomer component, 0.1 to 4.9% by weight of an alkylene oxide group-containing reactive monomer having an average number of moles of an oxyalkylene unit added to the reactive monomer of 3 to 40 is used as a base polymer. Since the alkylene oxide group-containing reactive monomer having an average number of moles to the reactive monomer of 3 to 40 is used for the base polymer, the resulting pressure sensitive adhesive composition can have improved compatibility between the base polymer and the alkali metal salt and have low staining and can be well prevented from causing bleeding to adherends.

The alkylene oxide group-containing reactive monomer is preferably an ethylene oxide group-containing reactive monomer. If a (meth)acrylic polymer having an ethylene oxide group-containing reactive monomer unit is used as a base polymer, the resulting pressure sensitive adhesive composition can have improved compatibility between the base polymer and the alkali metal salt and have low staining property and can be well prevented from causing bleeding to adherends.

The pressure sensitive adhesive layer of the present invention includes a crosslinked product of the pressure sensitive adhesive composition described above. The pressure sensitive adhesive layer of the invention is produced by crosslinking the pressure sensitive adhesive composition that can produce the advantageous effects described above, and thus it can prevent electrification of non-antistatically finished adherends and have low staining on adherends. Such a pressure sensitive adhesive layer is useful as an antistatic pressure sensitive adhesive layer. If the component units and the component ratio of the (meth)acrylic polymer and the type and content of the crosslinking agent are appropriately

selected or controlled, a pressure sensitive adhesive sheet with a higher level of heat resistance or weather resistance can be produced by crosslinking.

The pressure sensitive adhesive sheet of the present invention includes a support and a pressure sensitive adhesive layer that is formed on the support and includes a crosslinked product of the pressure sensitive adhesive composition described above. The pressure sensitive adhesive sheet of the present invention includes the pressure sensitive adhesive layer produced by crosslinking the pressure sensitive adhesive composition that can produce the advantageous effects described above, and thus it can prevent electrification of non-antistatically finished adherends and have low staining on adherends and a high level of adhesion reliability. Such an antistatic pressure sensitive adhesive sheet is very useful in the optical or electronic component-related field where staining can cause a particularly serious problem.

The surface-protecting film of the present invention includes: a support made of a plastic substrate which undergoes an antistatic treatment; and a pressure sensitive adhesive layer that is formed on one or both sides of the support and includes a crosslinked product of the pressure sensitive adhesive composition described above. The surface-protecting film of the present invention uses the pressure sensitive adhesive composition of the present invention that can produce the advantageous effects described above, and thus it can prevent electrification of non-antistatically finished adherends upon peeling and have low staining property on adherends and a high level of adhesion reliability. Such an antistatic surface-protecting film is very useful in the optical or electronic component-related field where staining can cause a particularly serious problem.

## Brief description of the drawing

Fig.1 is a schematic construction view of an electrostatic measuring part used for measuring a peeling electrification voltage in Examples.

## Best mode for carrying out the invention

The embodiments of the present invention are hereinafter described in detail.

The pressure sensitive adhesive composition of the present invention includes: a (meth)acrylic polymer containing, as a monomer component, 0.1 to 4.9% by weight of an alkylene oxide group-containing reactive monomer having an average number of moles of an oxyalkylene unit added to the reactive monomer of 3 to 40; and an alkali metal salt.

The (meth)acryl-based polymer used for the present invention is not particularly limited if it is a (meth)acryl-based polymer having adhesive property corresponding to the above.

In an embodiment of the present invention, the oxyalkylene unit of the alkylene oxide group-containing reactive monomer may have an alkylene group of 1 to 6 carbon atoms, and examples of such an oxyalkylene unit include oxymethylene, oxyethylene, oxypropylene, and oxybutylene. The hydrocarbon group of the oxyalkylene chain may be straight or branched.

The average number of moles of an oxyalkylene units added to the alkylene oxide group-containing reactive monomer is preferably from 3 to 40, more preferably from 4 to 35, particularly preferably from 5 to 30, in view of compatibility with the alkali metal salt. If the average addition mole number is 3 or more, the effect of reducing staining of materials to be protected will tend to be efficiently achieved. If the average addition mole number is more than 40, the interaction between the monomer unit and the alkali metal salt can be so strong that the pressure sensitive adhesive composition can undesirably form a gel which makes coating difficult. The end of the oxyalkylene chain may be maintained as a hydroxyl group or substituted with any other functional group.

The alkylene oxide group-containing reactive monomer is more preferably an ethylene oxide group-containing reactive monomer. If a (meth)acrylic polymer containing an ethylene oxide group-containing monomer unit is used as a base polymer, the alkali metal salt can have improved compatibility with the base polymer so that less low staining pressure sensitive adhesive compositions from which bleeding to adherends is well suppressed can be obtained.

In an embodiment of the present invention, for example, the alkylene oxide group-containing reactive monomer may be a (meth)acrylic acid alkylene oxide adduct or a reactive surfactant having a reactive substituent such as acryloyl, methacryloyl or allyl in its molecule.

Examples of the (meth)acrylic acid alkylene oxide adduct for use in the present invention include polyethylene glycol (meth)acrylate, polypropylene glycol (meth)acrylate, polyethylene glycol-polypropylene glycol (meth)acrylate, polyethylene glycol-polybutylene glycol (meth)acrylate, polypropylene glycol-polybutylene glycol (meth)acrylate, methoxypolyethylene glycol (meth)acrylate, ethoxypolyethylene glycol (meth)acrylate, butoxypolyethylene glycol (meth)acrylate, octoxypolyethylene glycol (meth)acrylate, lauroxypolyethylene glycol (meth)acrylate, stearoxypolyethylene glycol (meth)acrylate, phenoxypolyethylene glycol (meth)acrylate, methoxypolypropylene glycol (meth)acrylate, and octoxypolyethylene glycol-polypropylene glycol (meth)acrylate.

Examples of the reactive surfactant having an alkylene oxide group include reactive anionic surfactants, reactive nonionic surfactants and reactive cationic surfactants each having a (meth)acryloyl or allyl group.

Examples of the reactive anionic surfactant include compounds represented by Formulae (A1) to (A10).

[Formula 1]

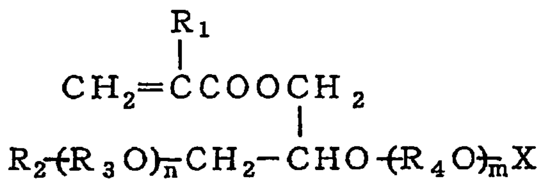

(A1)

In Formula (A1), $R_1$ represents hydrogen or a methyl group, $R_2$ represents a hydrocarbon or acyl group of 1 to 30 carbon atoms, X represents an anionic hydrophilic group, $R_3$ and $R_4$ are the same or different and each represent an alkylene group of 1 to 6 carbon atoms, and m and n represent an average addition mole number of 0 to 40, wherein (m+n) is from 3 to 40.

[Formula 2]

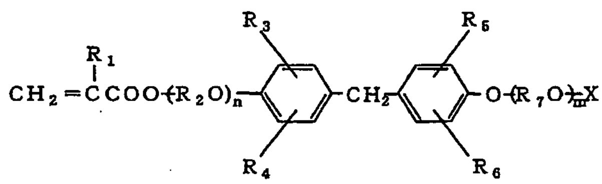

(A2)

In Formula (A2), $R_1$ represents hydrogen or a methyl group, $R_2$ and $R_7$ are the same or different and each represent an alkylene group of 1 to 6 carbon atoms, $R_3$ and $R_5$ are the same or different and each represent hydrogen or an alkyl group, $R_4$ and $R_6$ are the same or different and each represent hydrogen, an alkyl group, a benzyl group, or a styrene group, X represents an anionic hydrophilic group, and m and n represent an average addition mole number of 0 to 40, wherein (m+n) is from 3 to 40.

[Formula 3]

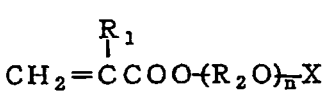

(A3)

In formula (A3), $R_1$ represents hydrogen or a methyl group, $R_2$ represents an alkylene group of 1 to 6 carbon atoms, X represents an anionic hydrophilic group, and n represents an average addition mole number of 3 to 40.

[Formula 4]

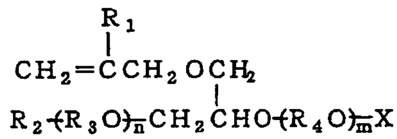

(A4)

In Formula (A4), $R_1$ represents hydrogen or a methyl group, $R_2$ represents a hydrocarbon group or an acyl group of 1 to 30 carbon atoms, $R_3$ and $R_4$ are the same or different and each represent an alkylene group of 1 to 6 carbon atoms, X represents an anionic hydrophilic group , and m and n represent an average addition mole number of 0 to 40, wherein (m+n) is from 3 to 40.

[Formula 5]

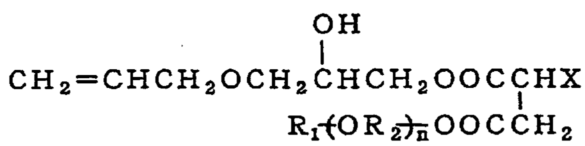

(A5)

In Formula (A5), $R_1$ represents a hydrocarbon group , an amino group or a carboxyl group, $R_2$ represents an alkylene group of 1 to 6 carbon atoms, and X represents an anionic hydrophilic group , and n represents an average addition mole number of 3 to 40.

[Formula 6]

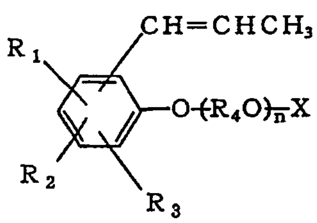

(A6)

In Formula (A6), $R_1$ represents a hydrocarbon group of 1 to 30 carbon atoms, $R_2$ represents hydrogen or a hydrocarbon group of 1 to 30 carbon atoms, $R_3$ represents a hydrogen or propenyl group , $R_4$ represents an alkylene group of 1 to 6 carbon atoms, and X represents an anionic hydrophilic group , and n represents an average addition mole number of 3 to 40.

[Formula 7]

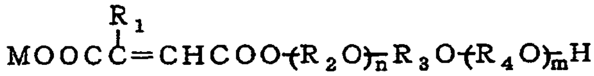

(A7)

In Formula (A7), $R_1$ represents hydrogen or a methyl group, $R_2$ and $R_4$ are the same or different and each represent an alkylene group of 1 to 6 carbon atoms, $R_3$ represents a hydrocarbon group of 1 to 30 carbon atoms, M represents hydrogen, an alkali metal, an ammonium group, or an alkanolammonium group, and m and n represent an average addition mole number of 0 to 40, wherein (m+n) is from 3 to 40.

[Formula 8]

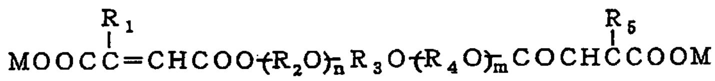

(A8)

In Formula (A8), $R_1$ and $R_5$ are the same or different and each represent hydrogen or a methyl group, $R_2$ and $R_4$ are the same or different and each represent an alkylene group of 1 to 6 carbon atoms, $R_3$ represents a hydrocarbon group of 1 to 30 carbon atoms, M represents hydrogen, an alkali metal, an ammonium group, or an alkanolammonium group, and m and n represent an average addition mole number of 0 to 40, wherein (m+n) is from 3 to 40.

[Formula 9]

$$MOOCCH{=}CHCOO{-}(R_1O)_n{-}R_2 \qquad (A9)$$

In Formula (A9), $R_1$ represents an alkylene group of 1 to 6 carbon atoms, $R_2$ represents a hydrocarbon group of 1 to 30 carbon atoms, M represents hydrogen, an alkali metal, an ammonium group, or an alkanolammonium group, and n represents an average addition mole number of 3 to 40.

[Formula 10]

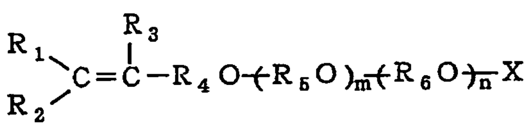

(A10)

In Formula (A10), $R_1$, $R_2$ and $R_3$ are the same or different and each represent hydrogen or a methyl group, $R_4$ represents a hydrocarbon group of 0 to 30 carbon atoms (wherein 0 carbon atoms indicate the absence of $R_4$), $R_5$ and $R_6$ are the same or different and each represent an alkylene group of 1 to 6 carbon atoms, X represents an anionic hydrophilic group, and m and n represent an average addition mole number of 0 to 40, wherein (m+n) is from 3 to 40.

X in each of Formula (A1) to (A6) and (A10) represents an anionic hydrophilic group. Examples of the anionic hydrophilic group include groups represented by Formulae (a1) and (a2) below.

[Formula 11] $-SO_3M_1$ (a1)

In Formula (a1), $M_1$ represents hydrogen, an alkali metal, an ammonium group, or an alkanolammonium group.

[Formula 1 2]

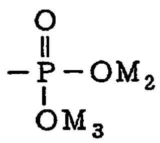

(a2)

In Formula (a2), $M_2$ and $M_3$ are the same or different and each represent hydrogen, an alkali metal, an ammonium group, or an alkanolammonium group.

Examples of the reactive nonionic surfactant include compounds represented by Formulae (N1) to (N6).

[Formula 1 3]

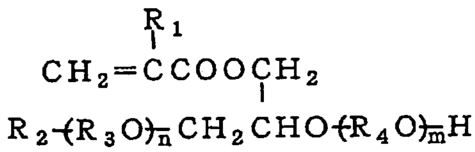

(N1)

In Formula (N1), $R_1$ represents hydrogen or a methyl group, $R_2$ represents a hydrocarbon or acyl group of 1 to 30 carbon atoms, $R_3$ and $R_4$ are the same or different and each represent an alkylene group of 1 to 6 carbon atoms, and m and n represent an average addition mole number of 0 to 40, wherein (m+n) is from 3 to 40.

[Formula 1 4]

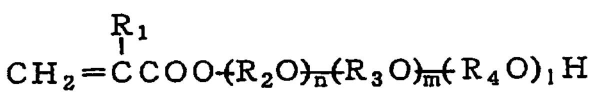

(N2)

In Formula (N2), $R_1$ represents hydrogen or a methyl group, $R_2$, $R_3$ and $R_4$ are the same or different and each represent an alkylene group of 1 to 6 carbon atoms, and n, m and 1 represent an average addition mole number of 0 to 40, wherein (n+m+1) is from 3 to 40.

[Formula 1 5]

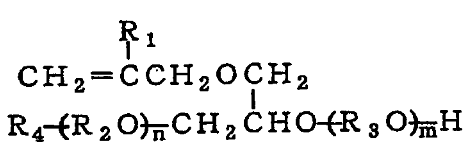

(N3)

In Formula (N3), $R_1$ represents hydrogen or a methyl group, $R_2$ and $R_3$ are the same or different and each represent an alkylene group of 1 to 6 carbon atoms, $R_4$ represents a hydrocarbon or acyl group of 1 to 30 carbon atoms, and m and n represent an average addition mole number of 0 to 40, wherein (m+n) is from 3 to 40.

[Formula 16]

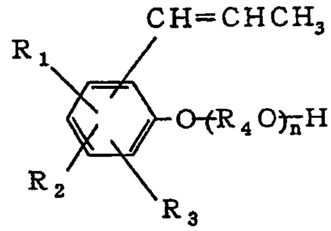

(N4)

In Formula (N4), $R_1$ and $R_2$ are the same or different and each represent a hydrocarbon group of 1 to 30 carbon atoms, $R_3$ represents hydrogen or a propenyl group, $R_4$ represents an alkylene group of 1 to 6 carbon atoms, and n represents an average addition mole number of 3 to 40.

[Formula 17]

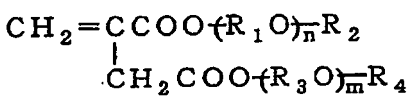

(N5)

In Formula (N5), $R_1$ and $R_3$ are the same or different and each represent an alkylene group of 1 to 6 carbon atoms, $R_2$ and $R_4$ are the same or different and each represent hydrogen or a hydrocarbon or acyl group of 1 to 30 carbon atoms, and m and n represent an average addition mole number of 0 to 40, wherein (m+n) is from 3 to 40.

[Formula 18]

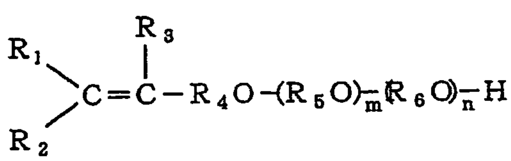

(N6)

In Formula (N6), $R_1$, $R_2$ and $R_3$ are the same or different and each represent hydrogen or a methyl group, $R_4$ represents a hydrocarbon group of 0 to 30 carbon atoms (wherein 0 carbon atoms indicate the absence of $R_4$), $R_5$ and $R_6$ are the same or different and each represent an alkylene group of 1 to 6 carbon atoms, and m and n represent an average addition mole number of 0 to 40, wherein (m+n) is from 3 to 40.

Examples of commercially available alkylene oxide group-containing reactive monomers include Blemmer PME-400, Blemmer PME-1000 and Blemmer 50POEP-800B (each manufactured by Nippon Oil & Fats Co., Ltd.), Latemul PD-420 and Latemul PD-430 (each manufactured by Kao Corporation), and Adekariasoap ER-10 and Adekariasoap NE-10 (each manufactured by Asahi Denka Kogyo K. K.).

A single type or two or more types of alkylene oxide group-containing reactive monomers may be used alone or in combination. The total content of the alkylene oxide-containing reactive monomer unit or units in the (meth)acrylic polymer is preferably from 0.1 to 4.9% by weight, more preferably from 0.15 to 4% by weight, still more preferably from 0.2 to 3% by weight, particularly preferably from 0.2 to 1% by weight. If the content of the alkylene oxide-containing reactive monomer unit is less than 0.1% by weight, the interaction with the alkali metal salt can be insufficient so that

the effect of suppressing bleeding of the alkali metal salt or the effect of reducing staining of materials to be protected can tend to be insufficiently achieved.

The glass transition temperature (Tg) of the above-mentioned (meth)acryl-based polymer as a base polymer is typically preferably -100 to - 5°C, more preferably -80 to -10°C. A glass transition temperature higher than 0°C occasionally allows sufficient pressure sensitive adhesive strength with difficulty. The glass transition temperature (Tg) of the (meth)acryl-based polymer can be adjusted within the above-mentioned range by properly changing the used monomer components and composition ratio thereof.

The (meth)acrylic polymer that may be used in the present invention is preferably a (meth)acrylic polymer mainly composed of one or more (meth)acrylate units having an alkyl group of 1 to 14 carbon atoms, because such a (meth)acrylic polymer can have well-balanced compatibility with the alkali metal salt and can produce favorable adhesive property.

The (meth)acrylic polymer mainly composed of one or more (meth)acrylate units having an alkyl group of 1 to 14 carbon atoms preferably includes 50 to 99.9% by weight, more preferably 60 to 95% by weight of one or more (meth) acrylate units having an alkyl group of 1 to 14 carbon atoms.

In the present invention, examples of the (meth)acrylate having an alkyl group of 1 to 14 carbon atoms include methyl (meth)acrylate, ethyl (meth)acrylate, n-butyl (meth)acrylate, sec-butyl (meth)acrylate, tert-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate.

For the surface-protecting film of the present invention, (meth)acrylates having an alkyl group of 6 to 14 carbon atoms are particularly preferably used, such as hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate. If the (meth)acrylate having an alkyl group of 6 to 14 carbon atoms is used, the adhesive strength to adherends can be easily controlled to be low so as to provide high releasability.

Other polymerizable monomer components that may be used as long as the effects of the present invention are not reduced include polymerizable monomers for adjusting the glass transition temperature or releasability of the (meth)acrylic polymer in such a manner that Tg can be 0°C or lower (generally -100°C or higher) so that balanced adhesive property can be easily delivered.

Examples of other polymerizable monomers that may be used as appropriate for the (meth)acrylic polymer also include cohesive strength or heat resistance enhancing components such as sulfonic acid group-containing monomers, phosphoric acid group-containing monomers, cyano group-containing monomers, vinyl esters, and aromatic vinyl compounds; and adhesive strength enhancing components or components with a functional group serving as a crosslinking point, such as carboxyl group-containing monomers, acid anhydride group-containing monomers, hydroxyl group-containing monomers, amide group-containing monomers, amino group-containing monomers, imide group-containing monomers, epoxy group-containing monomers, (meth)acryloyl morpholine, and vinyl ethers. Any one of these monomer compounds may be used alone, or two or more of these monomer compounds may be used in any combination.

When acid functional group-containing (meth)acrylates such as carboxyl group-containing monomers, acid anhydride group-containing monomers and phosphoric acid group-containing monomers are used, the acid value of the (meth)acrylic polymer should preferably adjusted to 29 or less. If the acid value of the (meth)acrylic polymer is more than 29, the antistatic properties can tend to be low.

The acid value may be adjusted by controlling the amount of the addition of the acid functional group-containing (meth)acrylate.. For example, when 2-ethylhexyl acrylate and acrylic acid are copolymerized to form a carboxyl group-containing acrylic polymer, the amount of acrylic acid should be adjusted to 3.7 parts by weight or less, based on 100 parts by weight of the total amount of 2-ethylhexyl acrylate and acrylic acid, so that the acid value can be set at 29 or less.

Examples of the sulfonic-acid-group-containing monomer include styrenesulfonic acid, allylsulfonic acid, 2-(meth)acrylamide-2-methylpropanesulfonic acid, (meth)acrylamidepropanesulfonic acid, sulfopropyl (meth)acrylate, and (meth)acryloyloxynaphthalenesulfonic acid, sodium vinylsulfonate.

Examples of the phosphoric-acid-group-containing monomer include 2-hydroxyethylacryloyl phosphate.

Examples of the cyano-group-containing monomer include acrylonitrile, and methacrylonitrile.

Examples of the vinyl esters include vinyl acetate, vinyl propionate, and vinyl laurate.

Examples of the aromatic vinyl-based monomer include styrene, chlorostyrene, chloromethylstyrene, α-methylstyrene, and other substituted styrene.

Examples of the carboxyl-group-containing monomer include acrylic acid, methacrylic acid, carboxyethyl (meth) acrylate, carboxypentyl (meth)acrylate, itaconic acid, maleic acid, fumaric acid, and crotonic acid. In particular, acrylic acid and methacrylic acid are preferably used.

Examples of the acid anhydride group-containing monomer include maleic acid anhydride, itaconic acid anhydride, and an acid anhydride of the aforementioned carboxyl group-containing monomer.

Examples of the hydroxyl-group-containing monomer include 2-hydroxyethyl (meth)acrylate, 2-hydroxypropyl (meth)acrylate, 4-hydroxybutyl (meth)acrylate, 2-hydroxyhexyl (meth)acrylate, 2-hydoroxybutyl(meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether.

Examples of the amide-group-containing monomer include acrylamide, methacrylamide, diethylacrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropylmethacrylamiide ,and diacetone acrylamide.

Examples of the amino-group-containing monomer include aminoethyl(meth)acrylate, N,N-dimethylaminoethyl (meth)acrylate, and N,N-dimethylaminopropyl (meth)acrylate.

Examples of the imide-group-containing monomer include cyclohexylmaleimide, isopropylmaleimide, N-cyclohexylmaleimide, and itaconic imide.

Examples of the epoxy-group-containing monomer include glycidyl (meth)acrylate, methylglycidyl(meth) acrylate , and allyl glycidyl ether.

Examples of the vinyl ether monomer include methyl vinyl ether, ethyl vinyl ether, and isobutyl vinyl ether.

Among other polymerizable monomers as described above, hydroxyl group-containing (meth)acrylates are preferably used, because they allows easy control of crosslinking.

In the invention, the other polymerizable monomers may be used alone or may be used in the form of a mixture of two or more thereof. The content of the whole of the monomer(s) is preferably from 0 to 40 parts by weight, more preferably from 0 to 35 parts by weight, still more preferably from 0 to 30 parts by weight with respect to 100 parts by weight of the (meth)acryl-based polymer. The use of other polymerizable monomers allows appropriate control of the adhesive property and the interaction with the alkali metal salt in a favorable manner.

The acrylic polymer for use in the present invention preferably has a weight average molecular weight of 100,000 to 5,000,000, more preferably of 200,000 to 4,000,000, still more preferably of 300,000 to 3,000,000. If the weight average molecular weight is less than 100,000, the cohesive strength of the pressure sensitive adhesive composition can be so low that pressure sensitive adhesive deposition can tend to occur. If the weight average molecular weight is more than 5,000,000, the flowability of the polymer can be reduced so that wetting of polarizing plates can be insufficient, which can tend to cause peeling. The weight-average molecular weight is a molecular weight obtained by measurement by GPC (gel permeation chromatography).

The production of the (meth)acryl-based polymer is not particulary limited, for example , a known radical polymerization method can be appropriately selected, examples thereof including solution polymerization, bulk polymerization, emulsion polymerization, bulk polymerization, and suspension polymerization. The resultant polymer may be any one selected from a random copolymer, a block copolymer, an alternate copolymer, and others.

The alkali metal salt for use in the present invention may be a lithium salt, a sodium salt, a potassium salt, or the like. Specifically, the metal salt that may be preferably used is composed of a cation of $Li^+$, $Na^+$ or $K^+$ and an anion of $Cl^-$, $Br^-$, $I^-$, $BF_4$-, $PF_6^-$, SCN-, $ClO_4^-$, $CF_3SO_3^-$, $(CF_3SO_2)_2N^-$, $(C_2F_5SO_2)_2N^-$, or $(CF_3SO_2)_3C^-$. In particular, lithium salts such as LiBr, LiI, $LiBF_4$, $LiPF_6$, LiSCN, $LiClO_4$, $LiCF_3SO_3$, $Li(CF_3SO_2)_2N$, $Li(C_2F_5SO_2)_2N$, and $Li(CF_3SO_2)_3$ are preferably used. One or more of these alkali metal salts may be used singly or in combination.

The amount of the alkali metal salt in the pressure sensitive adhesive composition is preferably from 0.01 to 5 parts by weight, more preferably from 0.05 to 4 parts by weight, still more preferably from 0.1 to 2 parts by weight, further more preferably from 0.2 to 1 part by weight, based on 100 parts by weight of the (meth)acrylic polymer. If the amount of the alkali metal salt is less than 0.01 parts by weight, the resulting antistatic property can be insufficient. If the amount of the alkali metal salt is more than 5 parts by weight, staining of materials to be protected can tend to undesirably increase.

In the pressure sensitive adhesive composition of the present invention, the (meth)acrylic polymer may be crosslinked as appropriate so that a pressure sensitive adhesive sheet with higher heat resistance can be produced. A specific crosslinking method includes adding a compound having a group capable of reacting with a carboxyl, hydroxyl, amino, or amide group appropriately contained as a crosslinking point in the (meth)acrylic polymer and allowing the compound to react. In this method, the compound serves as a so-called crosslinking agent and may be an isocyanate compound, an epoxy compound, a melamine resin, an aziridine derivative, or the like. Principally in order to obtain moderate cohesive strength, the isocyanate compound or the epoxy compound is particularly preferably used. One or more of these compounds may be used singly or in combination.

Examples of the isocyanate compound include aromatic isocyanates such as tolylenediisocyanate and xylenediisocyanate, alicyclic isocyanates such as isophoronediisocyanate, aliphatic isocyanates such as hexamethylenediisocyanate.

More specifically, examples of the isocyanate include lower aliphatic polyisocyanates such as butylenediisocyanate and hexamethylenediisocyanate, alicyclic isocyanates such as cyclopentylenediisocyanate, cyclohexylenediisocyanate and isophoronediisocyanate, aromatic isocyanates such as 2,4-tolylenediisocyanate, 4,4'-diphenylmethanediisocyanate and xylylenediisocyanate, a trimethylolpropane/tolylenediisocyanate trimer adduct (trade name: Coronate L, manufactured by Nippon Polyurethane Industry Co., Ltd.), a trimethylolpropane/hexamethylenediisocyanate trimer adduct (trade name: Coronate HL, manufactured by Nippon Polyurethane Industry Co., Ltd.), an isocyanate adducts such as an isocyanurate of hexamethylenediisocyanate (trade name: Coronate HX, manufactured by Nippon Polyurethane Industry Co., Ltd.). One or more of these compounds may be used singly or in combination.

Examples of epoxy compounds include N,N,N',N'-tetraglycidyl-m-xylenediamine (trade name: Tetrad-X , manufactured by Mitsubishi Gas Chemical Company, Inc.) and 1,3-bis(N,N-diglycidylaminomethyl)cyclohexane (trade name: Tetrad-C, manufactured by Mitsubishi Gas Chemical Company, Inc.). One or more of these compounds may be used singly or in combination.

The melamine resin may be a hexamethylolmelamine. One or more melamine resins may be used singly or in combination.

Examples of the aziridine derivative include a commercially available product trade named HDU (manufactured by Sogo Pharmaceutical Co., Ltd.), that trade named TAZM (manufactured by Sogo Pharmaceutical Co., Ltd.), and that trade named TAZO (manufactured by Sogo Pharmaceutical Co., Ltd.). These compounds may be used or may be used in combination.

The content of the crosslinking agent used in the present invention depends on balance between a (meth) acryl-based polymer to be crosslinked, and is appropriately selected depending on utility as a pressure sensitive adhesive sheet. In order to obtain sufficient heat resistance due to a cohesive strength of an acryl pressure sensitive adhesive, generally, the crosslinking agent is contained preferably at 0.01 to 15 parts by weight, more preferably 0.5 to 10 parts by weight relative to 100 parts by weight of the (meth)acryl-based polymer. When a content is less than 0.01 part by weight, crosslinking formation due to a crosslinking agent becomes insufficient, a cohesive strength of a pressure sensitive adhesive composition becomes small, and sufficient heat resistance is not obtained in some cases, and there is a tendency that it becomes cause for a pressure sensitive adhesive residue. On the other hand, when a content exceeds 15 parts by weight, a cohesive strength of a polymer is great, flowability is reduced, and wetting on an adherend becomes insufficient, and there is a tendency that this becomes cause for peeling. These crosslinking agents may be used or may be used in combination.

In an embodiment of the present invention, a polyfunctional monomer having two or more radiation-reactive unsaturated bonds may be added as a crosslinking agent to the pressure sensitive adhesive composition. In this case, the pressure sensitive adhesive composition may be crosslinked by application of radiations. A single molecule of the polyfunctional monomer may have two or more radiation-reactive unsaturated bonds derived from one or more radiation-crosslinkable (curable) moieties such as vinyl, acryloyl, methacryloyl, and vinylbenzyl groups. The polyfunctional monomer that may be preferably used generally has 10 or less radiation-reactive unsaturated bonds. One or more of these compounds may be used singly or in combination.

Examples of the polyfunctional monomer include ethylene glycol di(meth)acrylate, diethylene glycol di(meth) acrylate, tetraethylene glycol di(meth)acrylate, neopentylglycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene, and N,N'-methylenebisacrylamide.

The amount of the addition of the polyfunctional monomer may be appropriately selected depending on the balance with the (meth)acrylic polymer to be crosslinked and the use of the pressure sensitive adhesive sheet. In order to achieve sufficient heat resistance based on the cohesive strength of the acrylic pressure sensitive adhesive, 0.1 to 30 parts by weight of the polyfunctional monomer is preferably blended, based on 100 parts by weight of the (meth) acrylic polymer. In view of flexibility and adhesive property, 10 parts by weight or less of the polyfunctional monomer is preferably blended, based on 100 parts by weight of the (meth)acrylic polymer.

Examples of radiations include ultraviolet rays, laser beams, $\alpha$ rays, $\beta$ rays, $\gamma$ rays, X rays, and electron beams. Ultraviolet rays are preferably used, because of their good controllability or handleability. Ultraviolet rays with a wavelength of 200 to 400 nm are more preferably used. Ultraviolet rays may be applied using any appropriate light source such as a high pressure mercury lamp, a microwave-excited lamp and a chemical lamp. When ultraviolet rays are used as radiations, a photopolymerization initiator should be added to the acrylic pressure sensitive adhesive.

The photopolymerization initiator may be any material that can produce a radical or a cation, depending on the type of the radiation-reactive component, when ultraviolet rays with an appropriate wavelength capable of inducing the polymerization reaction are applied.

Examples of photoradical polymerization initiators include benzoins such as benzoin, benzoin methyl ether, benzoin ethyl ether, methyl o-benzoylbenzoate-p-benzoin ethyl ether, benzoin isopropyl ether, and $\alpha$-methylbenzoin; acetophenes such as benzyldimethylketal, trichloroacetophenone, 2,2-diethoxyacetophenone, and 1-hydroxycyclohexyl phenyl ketone; propiophenones such as 2-hydroxy-2-methylpropiophenone and 2-hydroxy-4'-isopropyl-2-methylpropiophenone; benzophenones such as benzophenone, methylbenzophenone, p-chlorobenzophenone, and p-dimethylaminobenzophenone; thioxanthons such as 2-chlorothioxanthon, 2-ethylthioxanthon and 2-isopropylthioxanthon; acylphosphine oxides such as bis(2,4,6-trimethylbenzoyl)-phenylphosphine oxide, 2,4,6-trimethylbenzoyldiphenylphosphine oxide, and (2,4,6-trimethylbenzoyl)-(ethoxy)-phenylphosphine oxide; and benzil, dibenzsuberone and $\alpha$-acyloxime ester. One or more of these compounds may be used singly or in combination.

Examples of photocation polymerization initiators include onium salts such as aromatic diazonium salts, aromatic iodonium salts and aromatic sulfonium salts; organometallic complexes such as iron-allene complexes, titanocene complexes and aryl silanol-aluminum complexes; and nitrobenzyl esters, sulfonic acid derivatives, phosphoric acid esters, phenolsulfonic acid esters, diazonaphthoquinone, and N-hydroxyimidosulfonate. One or more of these compounds may be used singly or in combination.

Preferably 0.1 to 10 parts by weight, more preferably 0.2 to 7 parts by weight of the photopolymerization initiatior is blended, based on 100 parts by weight of the (meth)acrylic polymer.

Photo-initiated polymerization aids such as amines may also be used in combination with the initiator. Examples of such photoinitiation aids include 2-dimethylaminoethyl benzoate, dimethylaminoacetophenone, ethyl p-dimethylaminobenzoate, and isoamyl p-dimethylaminobenzoate. One or more of these compounds may be used singly or in combination. Preferably 0.05 to 10 parts by weight, more preferably 0.1 to 7 parts by weight of the polymerization initiation aid is blended, based on 100 parts by weight of the (meth)acrylic polymer.

Further, the pressure sensitive adhesive composition used the pressure sensitive adhesive sheet of the present invention may contain other known additives, for example, a coloring agent, a pigment, other powder ,a surfactant agent, a plasticizer , a tackifier , a low-molecular-weight polymer, a surface lubricant agent, a leveling agent, an antioxidant, a corrosion preventing agent, a photo stabilizer, an ultraviolet absorbing agent, a polymerization inhibitor, a silane coupling agent, and an inorganic or an organic filler, metal powder, granules, foils, and others, which may be added to the pressure sensitive adhesive composition used in the pressure sensitive adhesive sheet of the present invention depending on utility.

If necessary, the pressure sensitive adhesive composition of the present invention may contain a surfactant. The pressure sensitive adhesive composition containing such a surfactant can have high wetting performance on adherends. In view of interaction with the alkali metal salt, the surfactant preferably contains an ether group.

Examples of such an ether group-containing surfactant include nonionic surfactants such as polyoxyalkylene fatty acid esters, polyoxyalkylene sorbitan fatty acid esters, polyoxyalkylene sorbitol fatty acid esters, polyoxyalkylene alkyl ethers, polyoxyalkylene alkyl allyl ethers, polyoxyalkylene alkyl phenyl ethers, polyoxyalkylene derivatives, polyoxyalkylene alkylamines, and polyoxyalkylene alkylamine fatty acid esters; anionic surfactants such as polyoxyalkylene alkyl ether sulfates, polyoxyalkylene alkyl ether phosphates, polyoxyalkylene alkyl phenyl ether sulfates, and polyoxyalkylene alkyl phenyl ether phosphates; and alkylene oxide group-containing cationic or amphoteric surfactants. The surfactant may also have a reactive substituent such as acryloyl, methacryloyl and allyl in its molecule.

The ether group-containing surfactant more preferably has an ethylene oxide group. Examples of such an ethylene oxide-group containing surfactant include nonionic surfactants such as polyoxyethylene fatty acid esters, polyoxyethylene sorbitan fatty acid esters, polyoxyethylene sorbitol fatty acid esters, polyoxyethylene alkyl ethers, polyoxyethylene alkyl allyl ethers, polyoxyethylene alkyl phenyl ethers, polyoxyethylene derivatives, polyoxyethylene alkylamines, and polyoxyethylene alkylamine fatty acid esters; anionic surfactants such as polyoxyethylene alkyl ether sulfates, polyoxyethylene alkyl ether phosphates, polyoxyethylene alkyl phenyl ether sulfates, and polyoxyethylene alkyl phenyl ether phosphates; and ethylene oxide group-containing cationic or amphoteric surfactants. The surfactant may also have a reactive substituent such as acryloyl, methacryloyl and allyl in its molecule.

Examples of commercially available ether group-containing surfactants include Adekariasoap NE-10 and Adekariasoap ER-10 (each manufactured by Asahi Denka Kogyo K. K.), Emulgen 120 (manufactured by Kao Corporation), and Noigen EA130T (manufactured by Dai-ichi Kogyo Seiyaku Co., Ltd.).

The surfactants may be used singly or in any combination. The amount of the blended surfactant is preferably from 0.01 to 10 parts by weight, more preferably from 0.05 to 5 parts by weight, based on 100 parts by weight of the base polymer. If the amount of the surfactant is less than 0.01 parts by weight, it can be difficult to achieve the effect of increasing wetting performance on adherends. If the amount of the surfactant is more than 10 parts by weight, staining of adherends can tend to undesirably increase.

The pressure sensitive adhesive layer of the present invention is produced by crosslinking the pressure sensitive adhesive composition described above. The pressure sensitive adhesive sheet of the present invention is produced by forming the pressure sensitive adhesive layer on a support (a support film). In this process, the pressure sensitive adhesive composition is generally crosslinked after the application of the pressure sensitive adhesive composition. Alternatively, however, the pressure sensitive adhesive layer formed by crosslinking the pressure sensitive adhesive composition may be transferred to a support or the like.

When the photopolymerization initiator is added as an optional component as described above, the pressure sensitive adhesive layer may be obtained by applying the pressure sensitive adhesive composition directly to a material to be protected or to one or both sides of a supporting material and then irradiating the coating with light. In general, the coating is irradiated with ultraviolet light with a wavelength of 300 to 400 nm in an amount of 200 to 4000 $mJ/cm^2$ under an illumination of 1 to 200 $mW/cm^2$ to form the pressure sensitive adhesive layer.

Any method may be used to form the pressure sensitive adhesive layer on the film. For example, the pressure sensitive adhesive composition is applied to a support, and the polymerization solvent or the like is removed by drying so that the pressure sensitive adhesive layer is formed on the support. Thereafter, the pressure sensitive adhesive layer may be subjected to curing for the purpose of controlling a component transfer from the pressure sensitive adhesive layer or controlling the crosslinking reaction. When the pressure sensitive adhesive composition is applied to a support to form a pressure sensitive adhesive sheet, one or more solvents other than the polymerization solvent of the composition may be added such that the composition can be uniformly applied to the support.

As the method for forming the pressure sensitive adhesive layer of the invention, there is used a known method used to produce a pressure sensitive adhesive sheet. Specific examples thereof include roll coating, gravure coating, reverse coating, roll blush, spray coating, air knife coating, and extrusion coating using a die coater.

Pressure sensitive adhesive sheets of the present invention are formed such that the thickness of aforementioned pressure sensitive adhesive layer is usually 3 to 100μm, preferably around 5 to 50μm. The pressure sensitive adhesive sheets are such that the aforementioned pressure sensitive adhesive layer is coated on one side or both sides of various supports comprising a plastic film such as a polyester film, or a porous material such as a paper and a non-woven fabric to form an aspect of a sheet or a tape. In particular, it is preferable to use a plastic substrate as a support in a case of a surface-protecting film.

The support is preferably a plastic substrate having heat resistance, solvent resistance and flexibility. When the support has flexibility, the pressure sensitive adhesive composition may be applied using a roll coater or the like, and the support may be wound into a roll.

The plastic substrate is not particularly limited as far as it can be formed into a sheet or a film, and examples include a polyolefin film such as polyethylene, polypropylene, poly-1-butene, poly-4-methyl-1-pentene, an ethylene·propylene copolymer, an ethylene·1-butene copolymer, an ethylene·vinyl acetate copolymer, an ethylene·ethyl acrylate copolymer, and an ethylene·vinyl alcohol copolymer, a polyester film such as polyethylene terephthalate, polyethylene naphthalate, and polybutylene terephthalate, a polyacrylate film, a polystyrene film, a polyamide film such as nylon 6, nylon 6,6, and partially aromatic polyamide, a polyvinyl chloride film, a polyvinylidene chloride film, and a polycarbonate film.

A thickness of the support is usually 5 to 200 μm, preferably around 10 to 100 μm.

The support may be subjected to releasing, or anti-staining treatment with silicone, fluorine, long chain alkyl-based or fatty acid amide-based releasing agent, or a silica powder, easy adhesion treatment such as acid treatment, alkali treatment, primer treatment, corona treatment, plasma treatment, and ultraviolet ray treatment, or coating-type, kneading-type, or deposition-type antistatic treatment, if necessary.

In addition, it is more preferably that a plastic substrate used in the surface-protecting film of the present invention is electrification preventing-treated.

Examples of a method of providing an electrification preventing (antistatic) layer on at least one side of a film include a method of coating an electrification preventing resin comprising an electrification preventing agent and a resin component, or an electrically conductive resin containing an electrically conductive polymer or an electrically conductive substance, and a method of depositing or plating an electrically conductive substance.

Examples of an electrification preventing (antistatic) agent contained in an electrification preventing resin include a cation-type electrification preventing agent having a cationic functional group such as a quaternary ammonium salt, a pyridinium salt, and a primary, secondary or tertiary amino group, an anion-type electrification preventing agent having an anionic functional group such as a sulfonic acid salt, a sulfuric acid ester salt, a phosphonic acid salt, and a phosphoric ester salt, an amphoteric-type electrification preventing agent such as alkylbetain and a derivative thereof, imidazoline and a derivative thereof, and alanine and a derivative thereof, a nonion-type electrification preventing agent such as aminoalcohol and a derivative, glycerin and a derivative thereof, and polyethylene glycol and a derivative thereof, and an ionic electrically conductive polymer obtained by polymerizing or copolymerizing a monomer having the aforementioned cation-type, anion-type, or amphoteric-type ionic electrically conductive group. These compounds may be used alone, or two or more of them may be used by mixing.

Specifically, examples of the cation-type electrification preventing agent include a (meth)acrylate copolymer having a quaternary ammonium group such as an alkyl trimethylammonium salt, acyloylamidopropyltrimethylammonium methosulfate, an alkylbenzylmethylammonium salt, acyl choline chloride, and polydimethylaminoethyl methacrylate, a styrene copolymer having a quaternary ammonium group such as polyvinylbenzyltrimethylammonium chloride, and a diallylamine copolymer having a quaternary ammonium group such as polydiallyldimethylammonium chloride. The compounds may be used alone, or two or more kinds may be used by mixing.

Examples of the anion-type electrification preventing agent include an alkyl sulfonic acid salt, an alkylbenzenesulfonic acid salt, an alkyl sulfate ester salt, an alkyl ethoxy sulfate ester salt, an alkyl phosphate ester salt, and a sulfonic acid group-containing styrene copolymer. These compounds may be used alone, or two or more kinds may be used by mixing.

Examples of the amphoteric-type electrification preventing agent include alkylbetain, alkylimidazoliumbetain,

and carbobetaingrafted copolymer. These compounds may be used alone, or two or more kinds may be used by mixing.

Examples of the nonion-type electrification preventing agent include fatty acid alkylolamide, di(2-hydroxyethyl) alkylamine, polyoxyethylenealkylamine, fatty acid glycerin ester, polyoxyethylene glycol fatty acid ester, sorbitan fatty acid ester, polyoxysorbitan fatty acid ester, polyoxyethylene alkyl phenyl ether, polyoxyethylene alkyl ether, polyethylene glycol, polyoxyethylenediamine, a copolymer consisting of polyether, polyester and polyamide, and methoxypolyethyleneglycol (meth)acrylate. These compounds may be used alone, or two or more kinds may be used by mixing.

Examples of the electrically conductive polymer include polyaniline, polypyrrole and polythiophene. These electrically conductive polymers may be used alone, or two or more kinds may be used by mixing.

Examples of the electrically conductive substance include tin oxide, antimony oxide, indium oxide, cadmium oxide, titanium oxide, zinc oxide, indium, tin, antimony, gold, silver, copper, aluminum, nickel, chromium, titanium, iron, covert, copper iodide, and an alloy and a mixture thereof. These electrically conductive substances may be used alone, or two or more kinds may be used by mixing.

As a resin component used in the electrification preventing resin and the electrically conductive resin, a generally used resin such as polyester, acryl, polyvinyl, urethane, melamine and epoxy is used. In the case of a polymer-type electrification preventing agent, it is not necessary that a resin component is contained. In addition, the electrification preventing resin component may contain compounds of a methylolated or alkylolated melamine series, a urea series, a glyoxal series, and an acrylamide series, an epoxy compound, or an isocyanate compound as a crosslinking agent.

An electrification preventing layer is formed, for example, by diluting the aforementioned electrification preventing resin, electrically conductive polymer or electrically conductive resin with a solvent such as an organic solvent and water, and coating this coating solution on a plastic film, followed by drying.

Examples of an organic solvent used in formation of the electrification preventing layer include methyl ethyl ketone, acetone, ethyl acetate, tetrahydrofuran, dioxane, cyclohexanone, n-hexane, toluene, xylene, methanol, ethanol, n-propanol and isopropanol. These solvents may be used alone, or two or more kinds may be used by mixing.

As a coating method in formation of the electrification preventing layer, the known coating method is appropriately used, and examples include roll coating, gravure coating, reverse coating, roll brushing, spray coating, and air knife coating methods, an immersing and curtain coating method, and an extrusion coating method with a die coater.

A thickness of the aforementioned electrification preventing resin layer, electrically conductive polymer or electrically conductive resin is usually 0.01 to 5 $\mu$m, preferably around 0.03 to 1 $\mu$m.

Examples of a method of depositing or plating an electrically conductive substance include vacuum deposition, sputtering, ion plating, chemical deposition, spray pyrolysis, chemical plating, and electric plating methods.

A thickness of the electrically conductive substance layer is usually 20 to 10000Å, preferably 50 to 5000Å.

As the kneading-type electrification preventing agent, the aforementioned electrification preventing agent is appropriately used. An amount of the kneading-type electrification preventing agent to be blended is 20% by weight or less, preferably in a range of 0.05 to 10% by weight relative to a total weight of a plastic film. A kneading method is not particularly limited as far as it is a method by which the electrification preventing agent can be uniformly mixed into a resin used in a plastic film, but for example, a heating roll, a Banbury mixer, a pressure kneader, and a biaxial kneading machine are used.

If necessary, a separator (or peeling liner, peeling sheet etc.) can be laminated on a surface of a pressure sensitive adhesive for the purpose of protecting a pressure sensitive adhesive surface. As a substrate constituting a separator, there are a paper and a plastic film, and a plastic film is suitably used from a viewpoint of excellent surface smoothness.

The film is not particularly limited as long as the film is a film capable of protecting the pressure sensitive adhesive layer. Examples thereof include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

The thickness of the separator is usually from about 5 to 200 $\mu$m, preferably from about 10 to 100 $\mu$m. If necessary, the separator may be subjected to releasing and anti-staining treatment with a silicone, fluorine-containing, long-chain alkyl, or aliphatic acid amide releasing agent, or silica powder.

A pressure sensitive adhesive composition, a pressure sensitive adhesive layer , a pressure sensitive adhesive sheet, and a surface-protecting film employing the present invention are particularly used for plastic products with static electricity easily caused, and above all, they are very useful as surface-protecting film used for avoiding static electricity in an electronic instrument and the like.

## Examples

The following will describe Examples for demonstrating the structure and the advantageous effects of the invention specifically, and others. About evaluation items in the Examples and the others, measurements described below were made.

<Measurement of acid value>

An acid value was measured using an automatically titrating apparatus (COM-550 manufactured by HIRANUMA SANGYO Co., Ltd.), and was obtained by the following equation.

$$A=\{(Y-X)\times f\times 5.611\}/M$$

A; Acid value
Y; Titration amount of sample solution (ml)
X; Titration amount of solution of only 50g of mixed solvent (ml)
f; Factor of titration solution
M; Weight of polymer sample (g)

Measurement conditions are as follows:

Sample solution: About 0.5g of a polymer sample was dissolved in 50g of a mixed solvent (toluene/2-propanol/distilled water= 50/49.5/0.5, weight ratio) to obtain a sample solution.
Titration solution: 0.1N 2-propanolic potassium hydroxide solution (for petroleum product neutralization value test manufactured by Wako Pure Chemical Industries, Ltd.)
Electrode: glass electrode; GE-101, comparative electrode; RE-201,
Measurement mode: petroleum product neutralization value test 1

<Measurement of Molecular Weight>

The weight average molecular weight was measured using a GPC system (HLC-8220GPC manufactured by Tosoh Corporation). The measurement conditions were as follows: sample concentration, 0.2% by weight (a THF solution); sample injection amount, 10 μl; eluent, THF; flow rate, 0.6 ml/min; measurement temperature, 40˚C; columns, TSK guard column Super HZ-H (one) + TSK gel Super HZM-H (two) as sample columns, TSK gel Super H-RC (one) as a reference column; detector, a differential refractometer (RI). The weight average molecular weight was determined as a polystyrene-equivalent molecular weight.

<Measurement of Glass Transition Temperature>

The glass transition temperature (Tg) (˚C) was determined with a dynamic viscoelasticity measurement system (ARES manufactured by Rheometric Scientific Inc.) by the method described below.

An about 2 mm-thick laminate of (meth)acrylic polymer sheets (each with a thickness of 20 μm) was prepared and stamped into 7.9 mmφ pieces. The resulting cylindrical pellets were used as samples for glass transition temperature measurement.

The sample was fixed on a 7.9 mmφ parallel plate tool and measured for the temperature dependence of the loss modulus G" in the dynamic viscoelasticity measurement system. The temperature at which the resulting G" curve was maximal was defined as the glass transition temperature (˚C).

The measurement conditions were as follows: measurement, shear mode; temperature range, -70˚C~150˚C; rate of temperature increase, 5˚C/min; frequency, 1 Hz.

<Preparation of (Meth)acrylic Polymer>

(Acrylic Polymer (A))

To a four-neck flask equipped with a stirring blade, a thermometer, a nitrogen gas introducing tube, and a condenser were added 199.4 parts by weight of 2-ethylhexyl acrylate, 0.6 parts by weight of a (meth)acrylic acid alkylene oxide adduct (Blemmer PME-1000 with an average oxyalkylene unit addition mole number of 23 manufactured by Nippon Oil & Fats Co., Ltd.), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (A)) (35% by weight) was prepared. Acrylic Polymer (A) had a weight average molecular weight of 490,000, a glass transition temperature (Tg) of -55˚C and an acid value of 0.0.

(Acrylic Polymer (B))

To a four-neck flask equipped with a stirring blade, a thermometer, a nitrogen gas introducing tube, and a condenser were added 199 parts by weight of 2-ethylhexyl acrylate, 1 part by weight of an alkylene oxide group-containing reactive surfactant (Latemul PD-430 with an average oxyalkylene unit addition mole number of 3 to 40 manufactured by Kao Corporation), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60°C, so that a solution of an acrylic polymer (named Acrylic Polymer (B)) (35% by weight) was prepared. Acrylic Polymer (B) had a weight average molecular weight of 550,000, a glass transition temperature (Tg) of -53°C and an acid value of 0.0.

(Acrylic Polymer (C))

To a four-neck flask equipped with a stirring blade, a thermometer, a nitrogen gas introducing tube, and a condenser were added 199 parts by weight of 2-ethylhexyl acrylate, 1 part by weight of an alkylene oxide group-containing reactive surfactant (Adekariasoap ER-10 with an average oxyalkylene unit addition mole number of 10 manufactured by Asahi Denka Kogyo K. K.), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60°C, so that a solution of an acrylic polymer (named Acrylic Polymer (C)) (35% by weight) was prepared. Acrylic Polymer (C) had a weight average molecular weight of 500,000, a glass transition temperature (Tg) of - 53°C and an acid value of 0.0.

(Acrylic Polymer (D))

To a four-neck flask equipped with a stirring blade, a thermometer, a nitrogen gas introducing tube, and a condenser were added 199 parts by weight of 2-ethylhexyl acrylate, 1 parts by weight of a (meth)acrylic acid alkylene oxide adduct (Blemmer 50POEP-800B with an average oxyalkylene unit addition mole number of 8 manufactured by Nippon Oil & Fats Co., Ltd.), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60°C, so that a solution of an acrylic polymer (named Acrylic Polymer (D)) (35% by weight) was prepared. Acrylic Polymer (D) had a weight average molecular weight of 530,000, a glass transition temperature (Tg) of -54°C and an acid value of 0.0.

(Acrylic Polymer (E))

To a four-neck flask equipped with a stirring blade, a thermometer, a nitrogen gas introducing tube, and a condenser were added 199 parts by weight of 2-ethylhexyl acrylate, 1 part by weight of an alkylene oxide group-containing reactive surfactant (Latemul PD-420 with an average oxyalkylene unit addition mole number of 3 to 40 manufactured by Kao Corporation), 8 parts by weight of 2-hydroxyethyl acrylate, 0.4 parts by weight of 2,2'-azobisisobutyronitrile as a polymerization initiator, and 312 parts by weight of ethyl acetate. Nitrogen gas was introduced to the mixture, while the mixture was gently stirred, and a polymerization reaction was performed for 5 hours, while the temperature of the liquid in the flask was kept at about 60°C, so that a solution of an acrylic polymer (named Acrylic Polymer (E)) (40% by weight) was prepared. Acrylic Polymer (E) had a weight average molecular weight of 560,000, a glass transition temperature (Tg) of -53°C and an acid value of 0.0.

(Acrylic Polymer (F))

To a four-neck flask equipped with a stirring blade, a thermometer, a nitrogen gas introducing tube, and a condenser were added 200 parts by weight of 2-ethylhexyl acrylate, 8 parts by weight of 2-hydroxyethyl acrylate, 0.4 parts by weight of 2,2'-azobisisobutyronitrile as a polymerization initiator, and 312 parts by weight of ethyl acetate. Nitrogen gas was introduced to the mixture, while the mixture was gently stirred, and a polymerization reaction was performed for 5 hours, while the temperature of the liquid in the flask was kept at about 60°C, so that a solution of an acrylic polymer (named Acrylic Polymer (F)) (40% by weight) was prepared. Acrylic Polymer (F) had a weight average molecular weight of 550,000, a glass transition temperature (Tg) of -55°C and an acid value of 0.0.

(Acrylic Polymer (G))

To a four-neck flask equipped with a stirring blade, a thermometer, a nitrogen gas introducing tube, and a condenser were added 199.9 parts by weight of 2-ethylhexyl acrylate, 0.1 parts by weight of a (meth)acrylic acid alkylene oxide adduct (Blemmer PME-1000 with an average oxyalkylene unit addition mole number of 23 manufactured by Nippon Oil & Fats Co., Ltd.), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (G)) (35% by weight) was prepared. Acrylic Polymer (G) had a weight average molecular weight of 520,000, a glass transition temperature (Tg) of -55˚C and an acid value of 0.0.

(Acrylic Polymer (H))

To a four-neck flask equipped with a stirring blade, a thermometer, a nitrogen gas introducing tube, and a condenser were added 199.4 parts by weight of 2-ethylhexyl acrylate, 0.6 parts by weight of a (meth)acrylic acid alkylene oxide adduct (Blemmer PME-4000 with an average oxyalkylene unit addition mole number of 90 manufactured by Nippon Oil & Fats Co., Ltd.), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (H)) (35% by weight) was prepared. Acrylic Polymer (H) had a weight average molecular weight of 430,000, a glass transition temperature (Tg) of -54˚C and an acid value of 0.0.

(Acrylic Polymer (I))

To a four-neck flask equipped with a stirring blade, a thermometer, a nitrogen gas introducing tube, and a condenser were added 199 parts by weight of 2-ethylhexyl acrylate, 1 part by weight of an alkylene oxide group-containing reactive surfactant (Latemul PD-420 with an average oxyalkylene unit addition mole number of 3 to 40 manufactured by Kao Corporation), 8 parts by weight of 2-hydroxyethyl acrylate, 0.4 parts by weight of 2,2'-azobisisobutyronitrile as a polymerization initiator, and 386.3 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (I)) (35% by weight) was prepared. Acrylic Polymer (I) had a weight average molecular weight of 580,000, a glass transition temperature (Tg) of -53˚C and an acid value of 0.0.

Acrylic Polymer (J)

To a four-neck flask equipped with a stirring blade, a thermometer, a nitrogen gas introducing tube, and a condenser were added 199.78 parts by weight of 2-ethylhexyl acrylate, 0.22 part by weight of an alkylene oxide group-containing reactive surfactant (Latemul PD-430 with an average oxyalkylene unit addition mole number of 3 to 40 manufactured by Kao Corporation), 8 parts by weight of 2-hydroxyethyl acrylate, 0.4 parts by weight of 2,2'-azobisisobutyronitrile as a polymerization initiator, and 325 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (J)) (39% by weight) was prepared. Acrylic Polymer (J) had a weight average molecular weight of 550,000, a glass transition temperature (Tg) of - 53˚C and an acid value of 0.0.

(Acrylic Polymer (K))

To a four-neck flask equipped with a stirring blade, a thermometer, a nitrogen gas introducing tube, and a condenser were added 194 parts by weight of 2-ethylhexyl acrylate, 6 parts by weight of a (meth)acrylic acid alkylene oxide adduct (Adekariasoap ER-10 with an average oxyalkylene unit addition mole number of 10 manufactured by Asahi Denka Kogyo K. K.), 8 parts by weight of 2-hydroxyethyl acrylate, 0.4 parts by weight of 2,2'-azobisisobutyronitrile as a polymerization initiator, and 325 parts by weight of ethyl acetate. Nitrogen gas was introduced to the mixture, while the mixture was gently stirred, and a polymerization reaction was performed for 5 hours, while the temperature of the liquid in the flask was kept at about 60˚C, so that a solution of an acrylic polymer (named Acrylic Polymer (K)) (39% by weight) was prepared. Acrylic Polymer (K) had a weight average molecular weight of 490,000, a glass transition temperature

(Tg) of -53°C and an acid value of 0.0.

<Preparation of Antistatic Agent Solution>

(Antistatic Agent Solution (a))

Five parts by weight of lithium iodide and 20 parts by weight of ethyl acetate were added to a four-neck flask equipped with a stirring blade, a thermometer and a condenser. Mixing and stirring were performed for 2 hours, while the temperature of the liquid in the flask was kept at about 25°C, so that an antistatic agent solution (a) (20% by weight) was prepared.

(Antistatic Agent Solution (b))

Five parts by weight of lithium bis(pentafluoroethanesulfonyl)imide and 20 parts by weight of ethyl acetate were added to a four-neck flask equipped with a stirring blade, a thermometer and a condenser. Mixing and stirring were performed for 2 hours, while the temperature of the liquid in the flask was kept at about 25°C, so that an antistatic agent solution (b) (20% by weight) was prepared.

(Antistatic Agent Solution (c))

0.1 parts by weight of lithium iodide and 7.9 parts by weight of polypropylene glycol (diol type, 2000 in number average molecular weight) and 32 parts by weight of ethyl acetate were added to a four-neck flask equipped with a stirring blade, a thermometer and a condenser. Mixing and stirring were performed for 2 hours, while the temperature of the liquid in the flask was kept at about 80°C, so that an antistatic agent solution (c) (20% by weight) was prepared.

<Preparation of Antistatic-treated Film>

Ten parts by weight of an antistatic agent (Microsolver RMd-142 mainly composed of tin oxide and polyester resin, manufactured by Solvex Co., Ltd.) was diluted with a mixed solvent of 30 parts by weight of water and 70 parts by weight of methanol to form an antistatic agent solution.

The resulting antistatic agent solution was applied to a polyethylene terephthalate (PET) film (38 μm in thickness) with a Meyer bar and dried at 130°C for one minute to form an antistatic layer (0.2 μm in thickness) by removing the solvent, so that an antistatic-treated film was prepared.

[Example 1]

(Preparation of pressure sensitive adhesive solution)

The Acrylic Polymer (A) solution (35% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25°C) for about one minute so that an acrylic pressure sensitive adhesive solution (1) was prepared.

(Production of pressure sensitive adhesive sheet)

The acryl pressure sensitive adhesive solution (1) was applied on the opposite surface of the above-mentioned antistatic-treated film to the antistatic-treated surface, and heated at a temperature of 130°C for 2 minutes to form a pressure sensitive adhesive layer having a thickness of 20 μm. Subsequently, the silicone-treated surface of a 25 μm-thick polyethylene terephthalate film whose one side had been silicone-treated was attached to the surface of the pressure sensitive adhesive layer, and then the resulting laminate was cured at 50°C for 2 days to give a pressure sensitive adhesive sheet.

[Example 2]

(Preparation of pressure sensitive adhesive solution)

The Acrylic Polymer (B) solution (35% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (2) was prepared.

<Preparation of Pressure sensitive adhesive Sheet>

A pressure sensitive adhesive sheet was prepared using the process of Example 1, except that the acrylic pressure sensitive adhesive solution (2) was used in place of the acrylic pressure sensitive adhesive solution (1).

[Example 3]

(Preparation of pressure sensitive adhesive solution)

The Acrylic Polymer (C) solution (35% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (3) was prepared.

<Preparation of Pressure sensitive adhesive Sheet>

A pressure sensitive adhesive sheet was prepared using the process of Example 1, except that the acrylic pressure sensitive adhesive solution (3) was used in place of the acrylic pressure sensitive adhesive solution (1).

[Example 4]

(Preparation of pressure sensitive adhesive solution)

The Acrylic Polymer (D) solution (35% by weight) was diluted to 20% by weight with ethyl acetate. To 100 parts by weight of the resulting solution were added 2 part by weight of the antistatic agent solution (b) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (4) was prepared.

<Preparation of Pressure sensitive adhesive Sheet>

A pressure sensitive adhesive sheet was prepared using the process of Example 1, except that the acrylic pressure sensitive adhesive solution (4) was used in place of the acrylic pressure sensitive adhesive solution (1).

[Example 5]

(Preparation of pressure sensitive adhesive solution)

The Acrylic Polymer (E) solution (40% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (5) was prepared.

<Preparation of Pressure sensitive adhesive Sheet>

A pressure sensitive adhesive sheet was prepared using the process of Example 1, except that the acrylic pressure sensitive adhesive solution (5) was used in place of the acrylic pressure sensitive adhesive solution (1).

[Comparative Example 1]

(Preparation of pressure sensitive adhesive splution)

The Acrylic Polymer (F) solution (40% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (6) was prepared.

<Preparation of Pressure sensitive adhesive Sheet>

A pressure sensitive adhesive sheet was prepared using the process of Example 1, except that the acrylic pressure sensitive adhesive solution (6) was used in place of the acrylic pressure sensitive adhesive solution (1).

[Comparative Example 2]

(Preparation of pressure sensitive adhesive solution)

The Acrylic Polymer (G) solution (35% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (7) was prepared.

<Preparation of Pressure sensitive adhesive Sheet>

A pressure sensitive adhesive sheet was prepared using the process of Example 1, except that the acrylic pressure sensitive adhesive solution (7) was used in place of the acrylic pressure sensitive adhesive solution (1).

[Comparative Example 3]

(Preparation of Pressure sensitive adhesive Solution)

The Acrylic Polymer (H) solution (35% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalyst, and mixing and stirring were performed at room temperature (25˚C) for about one minute in an attempt to form an acrylic pressure sensitive adhesive solution (8). However, gelation occurred in the acrylic pressure sensitive adhesive solution (8).

<Preparation of Pressure sensitive adhesive Sheet>

Since gelation occurred in the acrylic pressure sensitive adhesive solution (8), it was not possible to prepare a pressure sensitive adhesive sheet.

[Comparative Example 4]

[Preparation of Pressure sensitive adhesive Solution]

The Acrylic Polymer (F) solution (40% by weight) was diluted to 20% by weight with ethyl acetate. To 100 parts by weight of the resulting solution were added 2.0 parts by weight of an anionic surfactant of sodium dialkylsulfosuccinate (Neocoal SW manufactured by Dai-ichi Kogyo Seiyaku Co., Ltd. , a 100% product produced by removing the solvent from a 29% by weight solution), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalyst, and mixing and stirring were performed at room temperature (25˚C) for about one minute so that an acrylic pressure sensitive adhesive solution (9) was prepared.

<Preparation of Pressure sensitive adhesive Sheet>

A pressure sensitive adhesive sheet was prepared using the process of Example 1, except that the acrylic pressure sensitive adhesive solution (9) was used in place of the acrylic pressure sensitive adhesive solution (1).

[Comparative Example 5]

[Preparation of Pressure sensitive adhesive Solution]

The Acrylic Polymer (F) solution (40% by weight) was diluted to 20% by weight with ethyl acetate. To 100 parts by weight of the resulting solution were added 8 part by weight of the antistatic agent solution (c) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (10) was prepared.

<Preparation of Pressure sensitive adhesive Sheet>

A pressure sensitive adhesive sheet was prepared using the process of Example 1, except that the acrylic pressure sensitive adhesive solution (10) was used in place of the acrylic pressure sensitive adhesive solution (1).

[Example 6]

(Preparation of pressure sensitive adhesive solution)

The Acrylic Polymer (I) solution (35% by weight) was diluted to 20% by weight with ethyl acetate. To 100 parts by weight of the resulting solution were added 0.5 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (11) was prepared.

<Preparation of Pressure sensitive adhesive Sheet>

A pressure sensitive adhesive sheet was prepared using the process of Example 1, except that the acrylic pressure sensitive adhesive solution (11) was used in place of the acrylic pressure sensitive adhesive solution (1).

[Example 7]

(Preparation of pressure sensitive adhesive solution)

The Acrylic Polymer (I) solution (35% by weight) was diluted to 20% by weight with ethyl acetate. To 100 parts by weight of the resulting solution were added 2part by weight of the antistatic agent solution (b) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one

minute so that an acrylic pressure sensitive adhesive solution (12) was prepared.

<Preparation of Pressure sensitive adhesive Sheet>

A pressure sensitive adhesive sheet was prepared using the process of Example 1, except that the acrylic pressure sensitive adhesive solution (12) was used in place of the acrylic pressure sensitive adhesive solution (1).

[Example 8]

(Preparation of pressure sensitive adhesive solution)

The Acrylic Polymer (J) solution (39% by weight) was diluted to 20% by weight with ethyl acetate. To 100 parts by weight of the resulting solution were added 0.4 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (13) was prepared.

<Preparation of Pressure sensitive adhesive Sheet>

A pressure sensitive adhesive sheet was prepared using the process of Example 1, except that the acrylic pressure sensitive adhesive solution (13) was used in place of the acrylic pressure sensitive adhesive solution (1).

[Example 9]

(Preparation of pressure sensitive adhesive solution)

The Acrylic Polymer (K) solution (39% by weight) was diluted to 20% by weight with ethyl acetate. To 100 parts by weight of the resulting solution were added 1 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (14) was prepared.

<Preparation of Pressure sensitive adhesive Sheet>

A pressure sensitive adhesive sheet was prepared using the process of Example 1, except that the acrylic pressure sensitive adhesive solution (14) was used in place of the acrylic pressure sensitive adhesive solution (1).

[Comparative Example 6]

(Preparation of pressure sensitive adhesive solution)

The Acrylic Polymer (F) solution (40% by weight) was diluted to 20% by weight with ethyl acetate. To 100 parts by weight of the resulting solution were added 0.4 part by weight of the antistatic agent solution (a) (20% by weight), 0.3 parts by weight of an isocyanurate of hexamethylene diisocyanate (Coronate HX manufactured by Nippon Polyurethane Industry Co., Ltd) as a crosslinking agent, and 0.4 parts by weight of dibutyltin dilaurate (a 1% by weight ethyl acetate solution) as a crosslinking catalysis, and mixing and stirring were performed at room temperature (25˚C) for about one minute so that an acrylic pressure sensitive adhesive solution (15) was prepared.

<Preparation of Pressure sensitive adhesive Sheet>

A pressure sensitive adhesive sheet was prepared using the process of Example 1, except that the acrylic pressure sensitive adhesive solution (15) was used in place of the acrylic pressure sensitive adhesive solution (1).

Regarding pressure sensitive adhesive sheets obtained in the aforementioned Examples and Comparative Examples, a peeling electrification voltage, staining property and a pressure sensitive adhesive strength were assessed under the following conditions.

<Measurement of peeling electrification voltage>

The pressure sensitive adhesive sheet was cut into a size of a width of 70 mm and a length of 130 mm to peel a separator thereof, which sheet was thereafter adhered by a hand roller on the surface of a polarizing plate (SEG1425WVAGS2B, manufactured by Nitto Denko Corporation, width: 70 mm, length: 100 mm) stuck to the acrylic plate previously destaticized (ACRYLITE, manufactured by MITSUBISHI RAYON Co., Ltd., thickness: 1 mm, width: 70 mm, length: 100 mm) so that one end thereof protruded by 30 mm.

After being left under an environment of 23˚C and 50% RH for one day, the sample was set in a predetermined position as shown in Fig. 1. The one end protruding by 30 mm was fixed in an automatic wind-up machine and peeled off so as to have a peeling angle of 150˚ and a peeling rate of 10 m/min. Electric potential on the polarizing plate surface, which then occurred, were measured by an electrostatic voltmeter (KSD-0103, manufactured by Kasuga Electric Works Ltd.) fixed in the central position in the lengthwise direction of the sample. The measurement was performed under an environment of 23˚C and 50% RH.

<Evaluation of staining property>

The produced pressure sensitive adhesive sheet was cut into a size of a width of 50 mm and a length of 80 mm to peel a separator thereof, which sheet was thereafter adhered by a hand roller trapping air to create bubble on the surface of a polarizing plate (SEG1425WVAGS2B, manufactured by Nitto Denko Corporation, width: 70 mm, length: 100 mm) to produce an evaluation sample.

The sample was allowed to stand for 24 hours under the environment of 50˚Cx92 %RH and, thereafter, the pressure sensitive adhesive sheet was peeled from the adherend by a hand, and the state of staining and the trace of air bubble of an adherend surface were observed with naked eyes. Assessment criteria were such that the case of observation of non staining was ○, and the case of observation of staining was x.

<Measurement of pressure sensitive adhesive strength>

The produced pressure sensitive adhesive sheet was cut into a size of a width of 25 mm and a length of 100 mm to peel a separator thereof, which sheet was thereafter laminated at a pressure of 0.25 MPa on a polarizing plate (SEG1425DU, manufactured by Nitto Denko Corporation, width: 70 mm, length: 100 mm) to produce an evaluation sample.

After being laminated and then left under an environment of 23˚C and 50% RH for 30 minutes, pressure sensitive adhesive strength in peeling off at a peeling rate of 10 m/min and a peeling angle of 180˚ was measured by a tensile tester. The measurement was performed under an environment of 23˚C and 50% RH.

The above-mentioned results are shown in Table 1.

[Table 1]

| | Peeling electrification voltage (kV) | Staining property (-) | Adhesive strength (N/25mm) |
|---|---|---|---|
| Example 1 | 0.0 | ○ | 1.7 |
| Example 2 | 0.0 | ○ | 1.5 |
| Example 3 | 0.0 | ○ | 1.7 |
| Example 4 | -0.3 | ○ | 1.9 |
| Example 5 | -0.1 | ○ | 1.8 |
| Example 6 | -0.5 | ○ | 1.7 |
| Example 7 | -0.4 | ○ | 1.0 |
| Example 8 | 0.0 | ○ | 1.1 |
| Example 9 | -0.4 | ○ | 1.5 |
| Comparative Example 1 | 0.0 | × | 1.5 |
| Comparative Example 2 | 0.0 | × | 2.2 |
| Comparative Example 3 | - | - | - |

(continued)

| | Peeling electrification voltage (kV) | Staining property (-) | Adhesive strength (N/25mm) |
|---|---|---|---|
| Comparative Example 4 | 0.0 | × | 1.1 |
| Comparative Example 5 | -0.1 | × | 0.2 |
| Comparative Example 6 | -0.1 | × | 1.7 |

Through the above-mentioned results in Table 1, it was clarified that in the case (examples 1 to 9) of using the pressure sensitive adhesive composition produced according to the present invention, any of the examples was demonstrated that the absolute value of the peeling electrification voltage to the polarizing plate was suppressed to a low value of 0.5 kV or less and that the polarizing plate had no staining.

In contrast, when the pressure sensitive adhesive composition used did not contain the alkylene oxide group-containing reactive monomer unit (Comparative Example 1 and 4 to 6) and when the content of the monomer unit is less than 0.1% by weight (Comparative Example 2), staining was observed, although the peeling electrification voltage was suppressed. When the average oxyalkylene unit addition mole number was more than 40 (Comparative Example 3), the acrylic pressure sensitive adhesive solution formed a gel so that it was not possible to prepare a pressure sensitive adhesive sheet. As a result, it was demonstrated that the pressure sensitive adhesive compositions of Comparative Examples 1 to 6 were not adequate for antistatic pressure sensitive adhesive sheets, because the peeling electrification voltage to the polarizing plate and the staining of the adherend were not suppressed at the same time with any of the pressure sensitive adhesive sheets of Comparative Examples 1 to 6.

It has also been found that each of the pressure sensitive adhesive sheets of Examples 1 to 9 has a 180° peel strength in the range of 0.1 to 6 N/25 mm at a peel rate of 10 m/min and thus is suitable for releasable surface-protecting films.

Therefore, it has been demonstrated that the pressure sensitive adhesive composition of the present invention can have good antistatic properties when peeled from adherends, low staining of adherends, and a high level of adhesion reliability.

## Claims

1. A pressure sensitive adhesive composition comprising a (meth)acrylic polymer containing, as a monomer component, 0.1 to 4.9% by weight of a reactive monomer having an alkylene oxide group, wherein the reactive monomer has an average number of moles of an oxyalkylene unit added to the reactive monomer falls within the range from 3 to 40 , and an alkali metal salt.

2. The pressure sensitive adhesive composition according to claim 1, wherein the alkali metal salt is a lithium salt.

3. The pressure sensitive adhesive composition according to claim 1, wherein the alkylene oxide group-containing reactive monomer is an ethylene oxide group-containing reactive monomer.

4. A pressure sensitive adhesive layer comprising the pressure sensitive adhesive composition according to any one of claims 1 to 3 crosslinked.

5. A pressure sensitive adhesive sheet comprising a support, and an pressure sensitive adhesive layer that the pressure sensitive adhesive layer is formed on one side or both sides of the support and comprises a crosslinked product of the pressure sensitive adhesive composition according to any one of claims 1 to 3.

6. A surface-protecting film comprising a support made of plastic substrate which undergoes an antistatic treatment, and a pressure sensitive adhesive layer that the pressure sensitive adhesive layer is formed on one side or both sides of the support and comprises a crosslinked product of the pressure sensitive adhesive composition according to any one of claims 1 to 3.

## Patentansprüche

1. Druck-empfindliche Adhäsivzusammensetzung, die ein (Meth)akryl-Polymer, das, als einen Monomerbestandteil, 0,1 bis 4,9 Gewichts-% eines reaktiven Monomers mit einer Alkylenoxidgruppe enthält, wobei das reaktive Monomer eine durchschnittliche Molzahl einer Oxyalkyleneinheit, die zu dem reaktiven Monomer zugegeben ist, aufweist, die in den Bereich von 3 bis 40 fällt, und ein Alkalimetallsalz umfasst.

2. Druck-empfindliche Adhäsivzusammensetzung nach Anspruch 1, wobei das Alkalimetallsalz ein Lithiumsalz ist.

3. Druck-empfindliche Adhäsivzusammensetzung nach Anspruch 1, wobei das Alkylenoxidgruppe-enthaltene reaktive Monomer ein Ethylenoxidgruppe-enthaltendes reaktives Monomer ist.

4. Druck-empfindliche Adhäsivschicht, die die Druck-empfindliche Adhäsivzusammensetzung nach einem der Ansprüche 1 bis 3 quervernetzt umfasst.

5. Druck-empfindliches Adhäsivsheet, das einen Träger und eine Druck-empfindliche Adhäsivschicht umfasst, wobei die Druck-empfindliche Adhäsivschicht auf einer Seite oder beiden Seiten des Trägers gebildet ist und ein quervernetztes Produkt der Druck-empfindlichen Adhäsivzusammensetzung nach einem der Ansprüche 1 bis 3 umfasst.

6. Oberfläche-schützender Film, der einen Träger, der aus einem Plastiksubstrat gemacht ist, welcher einer antistatischen Behandlung unterzogen ist, und eine Druck-empfindliche Adhäsivschicht umfasst, wobei die Druck-empfindliche Adhäsivschicht auf einer Seite oder auf beiden Seiten des Trägers gebildet ist und ein quervernetztes Produkt der Druck-empfindlichen Adhäsivzusammensetzung nach einem der Ansprüche 1 bis 3 umfasst.

## Revendications

1. Composition adhésive sensible à la pression comprenant un polymère (méth)acrylique contenant, comme composant monomère, 0,1 à 4,9% en poids d'un monomère réactif ayant un groupe oxyde d'alkylène, dans lequel le monomère réactif a un nombre moyen de moles d'un motif oxyalkylène ajouté au monomère réactif situé dans la plage de 3 à 40, et un sel de métal alcalin.

2. Composition adhésive sensible à la pression selon la revendication 1, dans laquelle le sel de métal alcalin est un sel de lithium.

3. Composition adhésive sensible à la pression selon la revendication 1, dans laquelle le monomère réactif contenant un groupe oxyde d'alkylène est un monomère réactif contenant un groupe oxyde d'éthylène.

4. Couche adhésive sensible à la pression comprenant la composition adhésive sensible à la pression selon l'une quelconque des revendications 1 à 3 réticulée.

5. Feuille adhésive sensible à la pression comprenant un support, et une couche adhésive sensible à la pression que la couche adhésive sensible à la pression est formée sur un seul côté ou sur les deux côtés du support et comprend un produit réticulé de la composition adhésive sensible à la pression selon l'une quelconque des revendications 1 à 3.

6. Film protecteur de surface comprenant un support fait d'un substrat plastique qui subit un traitement antistatique, et une couche adhésive sensible à la pression laquelle couche adhésive sensible à la pression est formée sur un seul côté ou sur les deux côtés du support et comprend un produit réticulé de la composition adhésive sensible à la pression selon l'une quelconque des revendications 1 à 3.

[FIG.1]

Schematic view of an electrostatic measuring part

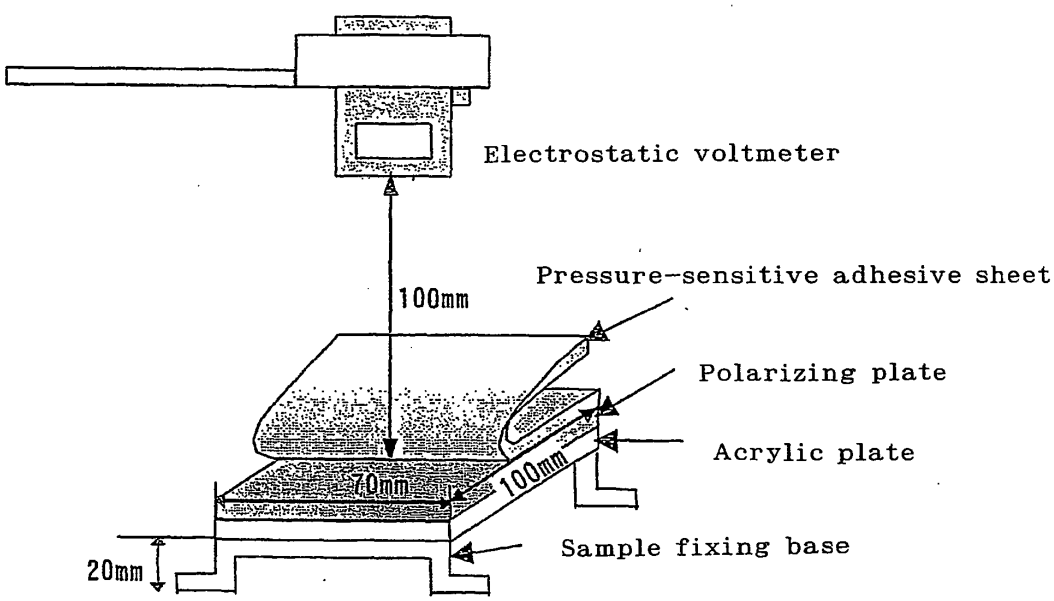

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9165460 A
- JP 6128539 A